# EUROPEAN PATENT SPECIFICATION

(11) **EP 2 859 821 B1**
(45) Date of publication and mention of the grant of the patent: **20.07.2016**
(21) Application number: 14188212.6
(22) Date of filing: 08.10.2014
(51) Int. Cl.: A47J 31/44, A47J 31/36

(54) **Locking device and capsule coffee machine having the same**
Verriegelungsvorrichtung und Kapselkaffeemaschine damit
Dispositif de verrouillage et machine à café à capsule équipée de celui-ci

(30) Priority: 14.10.2013 CN 201320632773 U
(43) Date of publication of application: 15.04.2015
(73) Proprietor: Tsann Kuen (Zhangzhou) Enterprise Co., Ltd., Zhangzhou,Fujian 363107 (CN)
(72) Inventor: Zhang, Yan-Xiang, Zhangzhou, Fujian 363107 (CN)
(74) Representative: Cordina, Kevin John

(56) References cited:
- EP-A1- 2 647 319
- CN-U- 201 996 331
- CN-U- 202 122 489
- CN-U- 203 468 348
- FR-A1- 2 917 957
- US-A1- 2005 132 891

## Description

The invention relates to a locking device, more particularly to a locking device that can lock and unlock two components, and a capsule coffee machine having the same.

Conventionally, to brew coffee, it is necessary to grind first the coffee beans into powder using a grinding machine, after which a coffee machine is used for brewing and filtering. To make the coffee simpler and to maintain its flavor, there exists in the market a capsule coffee machine which uses a coffee capsule. The coffee capsule mainly contains ground coffee with a stable flavor sealed in a capsule. During brewing, the coffee capsule is pierced by the capsule coffee machine, after which hot water is poured into the capsule. Hence, a coffee beverage having a stable flavor can be obtained. However, during use of the coffee capsule, a high operating temperature is necessary, and a top cover of the machine must be frequently opened for replacement of the coffee capsules. Thus, attention must be paid to the operation as well as safe use of the existing capsule coffee machine. Apart from the aforesaid capsule coffee machine, other home appliances, for example, thermos bottles, also have similar problems.

From the aforesaid description, during use of the existing capsule coffee machine or the thermos bottle, a top cover thereof must be opened to permit placement or replacement of a coffee capsule or addition of water, a locking plate is used to maintain its closed state, and a handle is used to operate the locking plate.

The document EP 2 647 319 A1 discloses a locking device for a coffee machine.

However, sometimes the handle of this type of home appliances may be mistakenly touched, causing the locking plate to deviate. When the top cover is to be closed, because the position of the locking plate is changed, a closing operation of the top cover cannot be smoothly performed.

Therefore, an object of the present invention is to provide a locking device that is capable of overcoming the aforesaid drawbacks of the prior art.

Another object of this invention is to provide a capsule coffee machine having the aforesaid locking device.

According to one aspect of this invention, a locking device for a coffee machine comprises a lower main body having an unlocking piece and at least one first engaging portion, an upper cover pivotally connected to and openably covering the lower main body, and a locking mechanism including a first locking member pivotally mounted on the upper cover, a second locking member pivotally mounted on the upper cover in proximity to the first locking member, a locking spring urging the first and second locking members to move toward each other to a locking position, and a handle mounted on the upper cover and engaged to said first locking member to control pivoting of the first locking member. The first locking member includes a primary locking plate having a first retaining portion, and a second engaging portion releasably engageable with the first engaging portion. The second locking member has a second retaining portion releasably engageable with the first retaining portion, and an unlocking portion corresponding to the unlocking piece. When the upper cover is in a covering position, the second engaging portion engages the first engaging portion, and said unlocking piece abuts against and pushes said unlocking portion to disengage the second retaining portion from the first retaining portion and to dispose the first and second locking members in an unlocking position. When said upper cover is in an open position, the handle drives the first locking member to pivot, the second engaging portion disengages from the first engaging portion, said unlocking piece does not abut against said unlocking portion, and the locking spring pulls the first and second locking members toward engagement with each other to switch the first and second members from the unlocking position to the locking position.

According to another aspect of this invention, a capsule coffee machine for brewing coffee from a coffee capsule comprises a housing, a locking device as described above mounted in the housing, and a brewing unit. The brewing unit is disposed in the upper cover of the locking device.

Other features and advantages of the present invention will become apparent in the following detailed description of the embodiment with reference to the accompanying drawings, of which:
Fig. 1 is a perspective view of a capsule coffee machine according to the embodiment of the present invention;
Fig. 2 is an exploded perspective view of a locking device of the embodiment;
Fig. 3 is a partly sectional view of the locking device, illustrating an upper cover of the locking device in an open position;
Fig. 4 is an exploded perspective view of a locking mechanism of the locking device;
Fig. 5 is a sectional side view of the locking device, illustrating a first engaging portion of a sliding body portion of a lower main body thereof and a second engaging portion of a first locking member of the locking mechanism in an engaging position;
Fig. 6 is a sectional view of the locking device, illustrating the upper cover thereof in a covering position;
Fig. 7 is a view similar to Fig. 5, but with the first and second engaging portions in a non-engaging position; and
Fig. 8 is a view similar to Fig. 5, but illustrating first and second locking members of the locking mechanism in a locking position.

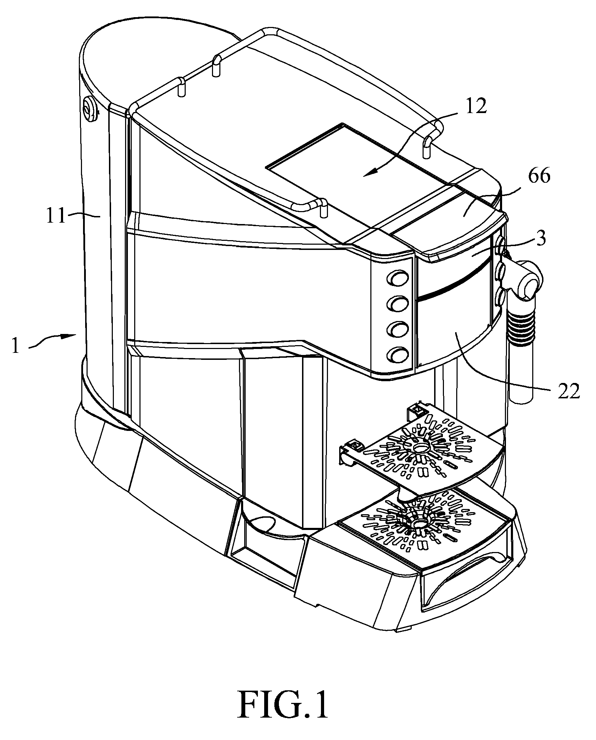

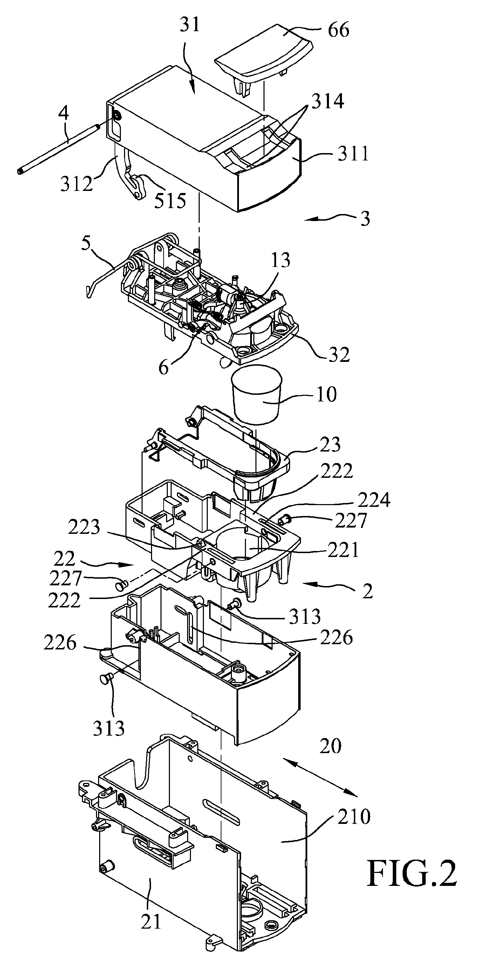

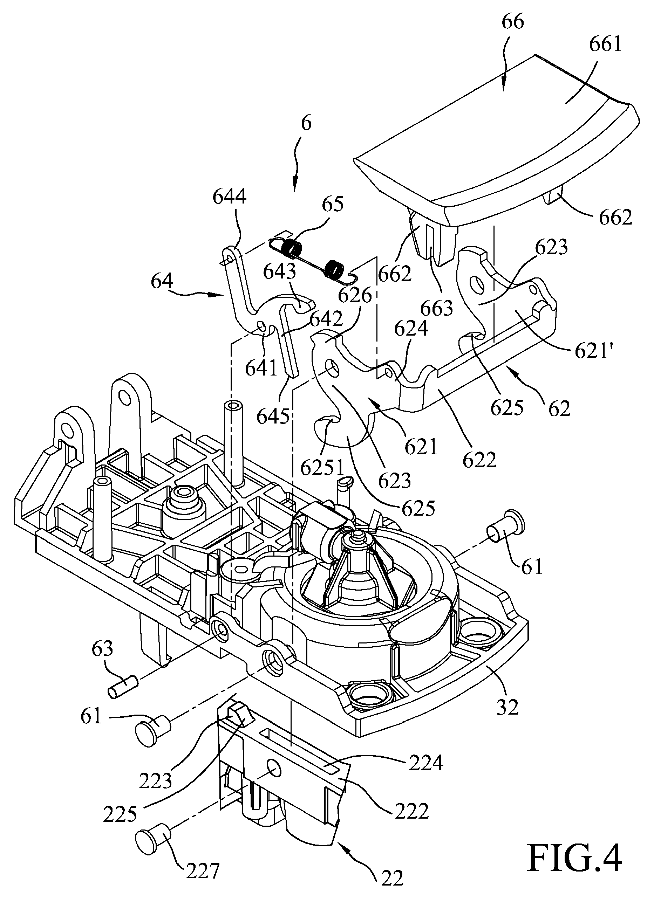

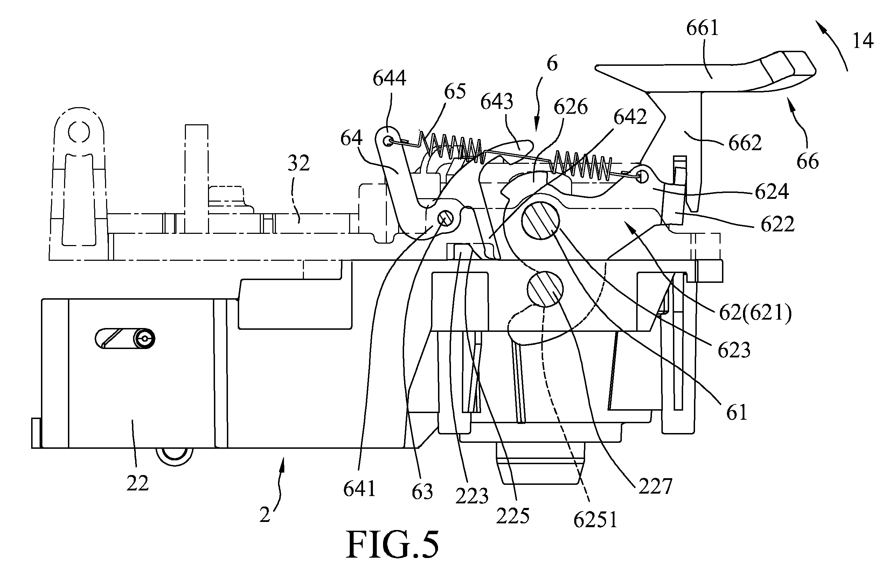

Referring to Figs. 1 to 8, a capsule coffee machine 1 according to the embodiment of the present invention can brew coffee from a coffee capsule 10, and is shown to comprise a housing 11, a locking device 12 mounted in the housing 11 in proximity to a front top thereof, and a brewing unit 13.

The locking device 12 includes a lower main body 2, an upper cover 3, a main shaft 4 for pivotally mounting the upper cover 3 on the lower main body 2, a torsion spring 5 sleeved on the main shaft 4 for biasing the upper cover 3 to pivot to an open position along an opening direction 14, and a locking mechanism 6 for releasably engaging the upper cover 3 and the lower main body 2. The brewing unit 13 is disposed in the upper cover 3.

The lower main body 2 includes a fixed body portion 21, a sliding body portion 22, and an inclinable capsule-supporting frame 23 mounted pivotably on the sliding body portion 22 for supporting the coffee capsule 10. The fixed body portion 21 defines an accommodation space 210 extending along a sliding direction 20. The sliding body portion 22 is mounted in the accommodation space 210, and is slidable relative to the fixed body portion 21 along the sliding direction 20. The sliding body portion 22 includes a brewing chamber 221 for receiving the coffee capsule 10 therein, two lateral frames 222 respectively disposed on left and right sides of the chamber 221, and an unlocking piece 223 projecting upward from a top face of one of the lateral frames 222. Each lateral frame 222 has an elongated through hole 224 formed in the top face thereof and extending in a length direction thereof. The unlocking piece 223 has a first inclined face 225 extending inclinedly, upwardly and rearwardly from the top face of the one of the lateral frames 222. The sliding body portion 22 further includes two slide guide grooves 226 respectively formed in the lateral frames 222 and extending in a direction transverse to the length direction thereof, and two first engaging portions 227 respectively disposed on the lateral frames 222 in proximity to the through holes 224. In this embodiment, each of the first engaging portions 227 is in the form of an insert pin.

The upper cover 3 includes an outer frame 31, and a brewing-supporting frame 32 disposed in the outer frame 31 for supporting the brewing unit 13. The outer frame 31 includes a frame body 311 encapsulating the brewing-supporting frame 32, two push-pull rods 312 symmetrically spaced apart from each other in a left-right direction and extending downwardly, forwardly, and arcuately from a rear end of the frame body 311, and two slide pins 313 respectively extending through and respectively slidable along the slide guide grooves 226. Each slide pin 313 is further connected to a bottom end of a respective push-pull rod 312. As such, when the upper cover 3 pivots about the main shaft 4, the push-pull rods 312 can drive the sliding body portion 22 to slide reciprocally within the accommodation space 210 along the sliding direction 20. Moreover, the frame body 311 has two insert slots 314 spaced apart in the left-right direction, extending along a length direction thereof, and proximate to a front top thereof.

The locking mechanism 6 is used to engage and disengage the upper cover 3 with and from the lower main body 2. That is, by using the locking mechanism 6 to engage together the upper cover 3 and the lower main body 2, it is ensured that the upper cover 3 cannot be opened during brewing of the coffee capsule 10, so that safe use and smooth operation of the capsule coffee machine 1 can be enhanced. In this embodiment, the locking mechanism 6 includes a first locking member 62, a second locking member 64, a locking spring 65, and a handle 66.

The first locking member 62 is pivotally mounted on the brewing-supporting frame 32 by two first pivot pins 61, and includes a primary locking plate 621, a secondary locking plate 621' spaced apart from and parallel to the primary locking plate 621, and a connecting plate 622 connected between the primary and secondary locking plates 621, 621'. The primary and secondary locking plates 621, 621' may have the same or different structure. In this embodiment, the primary and secondary locking plates 621, 621' have the same structure. Only the structure of the primary locking plate 621 will thus be described hereinafter.

The primary locking plate 621 includes a pivot-connecting portion 623 having a pivot hole for extension of one of the first pivot pins 61 therethrough, a first spring pulling portion 624 extending from the pivot-connecting portion 623 to connect with one end of the connecting plate 622, a second engaging portion 625 extending between and disposed below the pivot-connecting portion 623 and the first spring pulling portion 624, and a first retaining portion 626 protruding from the pivot-connecting portion 623 in a direction away from the second engaging portion 625. In this embodiment, the second engaging portion 625 includes an engaging groove 6251 releasably engageable with one of the first engaging portions 227. It should be noted that it is sufficient for the secondary locking plate 621' to have the pivot-connecting portion 623 for extension of the other one of the first pivot pins 61 therethrough and the second engaging portion 625 with the engaging groove 6251 for releasable engagement with the other one of the first engaging portions 227, and may be dispensed with the first spring pulling portion 624 and the first retaining portion 626.

The second locking member 64 is pivotally mounted on the brewing-supporting frame 32 by a second pivot pin 63, and is disposed in proximity to and rearwardly of the primary locking plate 621. The second locking member 64 includes a pivot-connecting portion 641 for extension of the second pivot pin 63 therethrough, an unlocking portion 642 extending from the pivot-connecting portion 641 toward the unlocking piece 223, a second retaining portion 643 extending from the pivot-connecting portion 641 toward the first retaining portion 626 of the primary locking plate 621, and a second spring pulling portion 644 extending upward from the pivot-connecting portion 641. The second spring pulling portion 644 and the second retaining portion 643 are disposed on two opposite sides of the second pivot pin 63. The unlocking portion 642 has a second inclined face 645. The first inclined face 225 abuts against and pushes the second inclined face 645 to cause the second locking member 64 to pivot when the upper cover 3 is moved to a covering position.

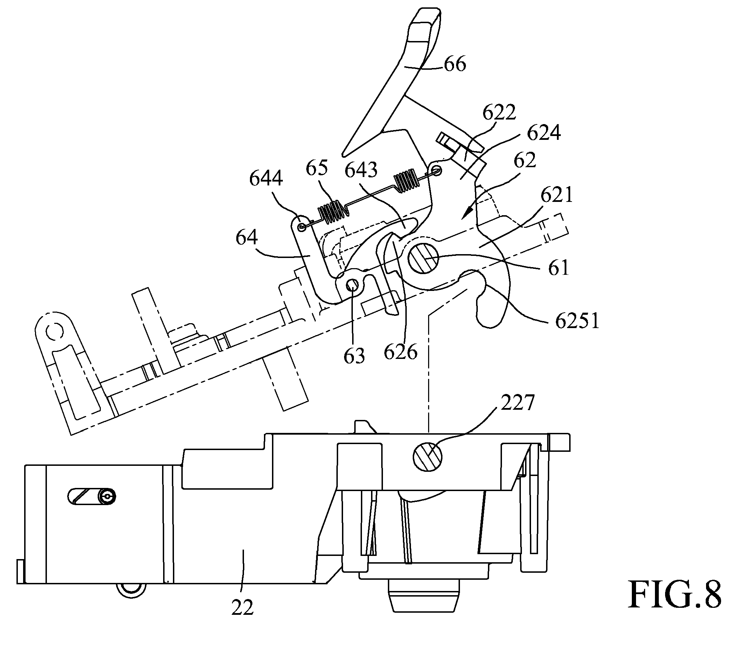

Two opposite ends of the locking spring 65 are hooked to the second spring pulling portion 644 of the second locking member 64 and the first spring pulling portion 624 of the primary locking plate 621 of the first locking member 62, respectively. Through the pulling force of the locking spring 65, the first and second locking members 62, 64 are urged to move toward a locking position in which the second retaining portion 643 is releasably engaged to the first retaining portion 626 of the primary locking plate 621, as shown in Fig. 8.

In this embodiment, the handle 66 is used to control pivoting of the first locking member 62, and includes an operating plate 661 protruding forwardly from the upper cover 3, and two spaced-apart clamping plates 662 projecting downward from the operating plate 661 into the insert slots 314 of the upper cover 3, respectively. Each clamping plate 662 has a clamping groove 663 clampingly receiving the connecting plate 622.

With reference to Figs. 1, 2, and 4 to 6, when the upper cover 3 is in the covering position, the coffee capsule 10 is supported on the capsule-supporting frame 23, and the torsion spring 5 stores a force to bias the upper cover 3 to pivot to the open position along the opening direction 14. Further, the second engaging portions 625 of the primary and secondary locking plates 621, 621' of the first locking member 62 are respectively engaged to the first engaging portions 227 of the lower main body 2. Thus, the upper cover 3 is firmly engaged to the lower main body 2 so as to ensure that the upper cover 3 will not be opened during a high temperature brewing of the coffee. On the other hand, because the unlocking portion 642 of the second locking member 64 abuts against the top face of the lateral frame 222 with the unlocking piece 223, the second locking member 64 can overcome a resilient force of the locking spring 65. Further, the second retaining portion 643 of the second locking member 64 and the first retaining portion 626 of the primary locking plate 621 are spaced apart from each other. That is, the first and second locking members 62, 64 are disposed in an unlocking position.

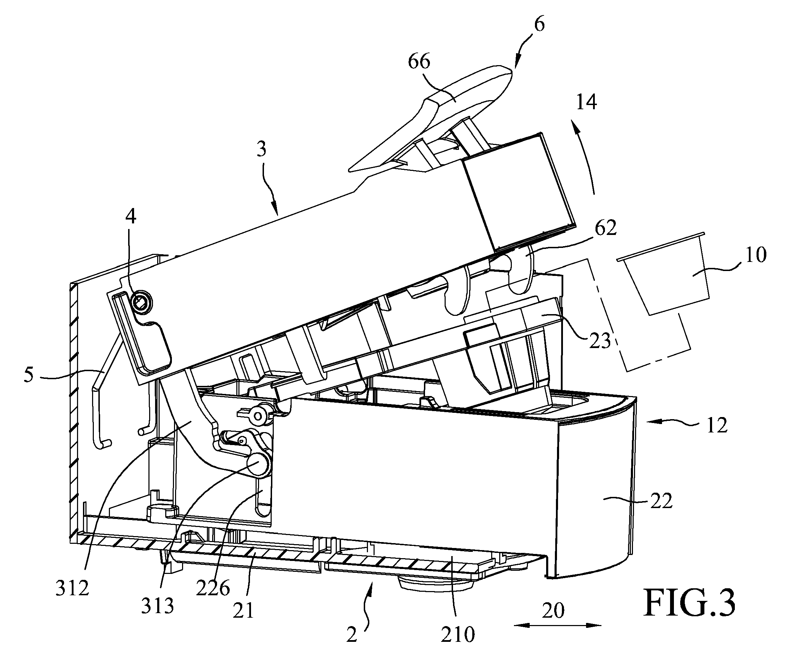

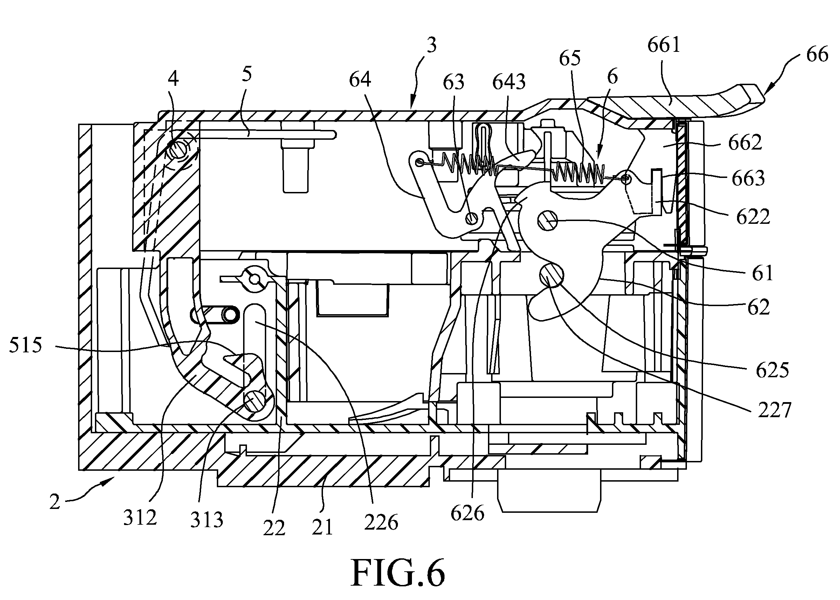

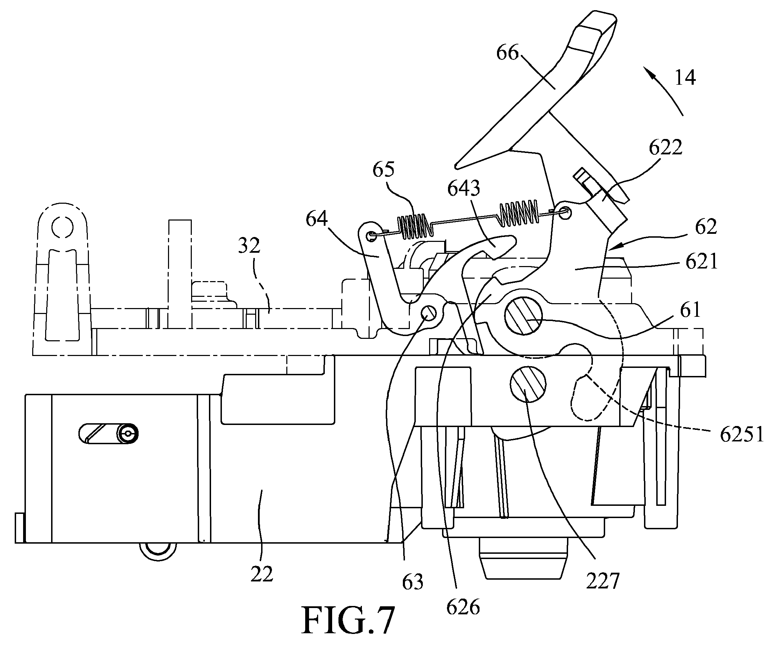

With reference to Figs. 3 and 6 to 8, to remove the used coffee capsule 10 and place a new one in the capsule coffee machine 1, the handle 66 is first pulled along the opening direction 14 to drive the first locking member 62 to pivot about the first pivot pins 61. When the second engaging portions 625 of the first locking member 62 are respectively disengaged from the first engaging portions 227 of the lower main body 2, because the stored biasing force of the torsion spring 5 is released, the upper cover 3 is biased by the torsion spring 5 to pivot about the main shaft 4 toward the opening direction 14 to the open position. During pivoting of the upper cover 3 toward the opening direction 14, the following two actions are generated:
1) In following the upward movement of the upper cover 3, the unlocking portion 642 of the second locking member 64 will gradually move away from the lower main body 2. At this moment, the locking spring 65 will pull the second spring pulling portion 644 of the second locking member 64 and the first spring pulling portion 624 of the primary locking plate 621 toward each other until the second retaining portion 643 engages the first retaining portion 626 of the primary locking plate 621, thereby switching the first and second locking members 62, 64 from the unlocking position shown in Fig. 7 to the locking position shown in Fig. 8. At this time, the locking mechanism 6 has a fixed angular relationship, and pivots along with the upper cover 3 toward the opening direction 14.
2) On the other hand, the slide pins 313 that are connected to the push-pull rods 312 of the upper cover 3 will move upward along the slide guide grooves 226 of the sliding body portion 22, and the sliding body portion 22 together with the capsule-supporting frame 23 is pushed outwardly and forwardly by the push-pull rods 312. That is, when the upper cover 3 is switched from the covering position shown in Fig. 6 to the open position shown in Fig. 3, the sliding body portion 22 will move forwardly and outwardly along the sliding direction 20 relative to the fixed body portion 21. Because the sliding body portion 22 as well as the capsule-supporting frame 23 will protrude out of the accommodation space 210 when the upper cover 3 is in the open position, the coffee capsule 10 can be easily and safely removed from the capsule-supporting frame 23.

When the upper cover 3 is in the open position, the first and second locking members 62, 64 are in the locking position, as shown in Fig. 8. That is, the primary locking plate 621 of the first locking member 62 and the second locking member 64 are engaged to each other. When the upper cover 3 is pressed down along a direction opposite to the opening direction 14, a front end of the upper cover 3 will overcome the resilient force of the torsion spring 5 and moves downward. During the downward movement of the upper cover 3 toward the lower main body 2, in addition to using the push-pull rods 312 to pull the sliding body portion 22 to retract into the accommodation space 210 of the fixed body portion 21, the second engaging portions 625 of the first locking member 62 are also moved to lower fronts of the respective first engaging portions 227.

When the unlocking portion 642 of the second locking member 64 approaches the unlocking piece 223 of the sliding body portion 22, through pushing of the first inclined face 225 of the unlocking piece 223, the second locking member 64 can overcome the resilient force of the locking spring 65 so as to switch to the unlocking position, as shown in Fig. 7. At this moment, the handle 66 is pressed down to drive the first locking member 62 to pivot about the first pivot pins 61 and engage the second engaging portions 625 with the respective first engaging portions 227.

Through the first inclined face 225 of the unlocking piece 223 and the second inclined face 645 of the unlocking portion 642 of the second locking member 64, the second locking member 64 can be guided to pivot smoothly. Since the first and second inclined faces 225, 645 are non-vertical, buffering and friction-reducing effects can be achieved.

The main focus of this invention is to ensure engagement between the lower main body 2 and the upper cover 3, and facilitate closing of the upper cover 3. With regard to how the coffee capsule 10 can be removed from capsule-supporting frame 23 after brewing is not a main aspect of this invention, so that a detailed description thereof is dispensed herewith.

From the foregoing, it will be seen that the capsule coffee machine 1 having the locking device 12 of this invention not only has an innovative structure, but also during brewing, through the configuration of the locking device 12 that engages the upper cover 3 with the lower main body 2, safety is ensured during the brewing process. Further, during opening of the upper cover 3, by pulling the handle 66 along the opening direction 14, the upper cover 3 and the handle 66 can be simultaneously opened. During closing of the upper cover 3, since the handle 66 is engaged to the first locking member 62 and the first locking member 62 is engaged to the second locking member 64, when the upper cover 3 is moved down, the handle 66 and the first locking member 62 will not pivot due to misoperation. That is, it is assured that the second engaging portions 625 of the first locking member 62 will gradually move downward and then rearward from the top front of the first engaging portions 227 of the sliding body portion 22. When the unlocking portion 642 of the second locking member 64 touches the unlocking piece 223 of the sliding body portion 22, the second locking member 64 is disengaged from the first locking member 62, and the handle 66 can be pressed down to engage the second engaging portions 625 with the first engaging portions 227. Hence, this invention can prevent misoperation of the handle 66 to ensure smooth closing operation of the capsule coffee machine 1.

## Claims

1. A locking device (12) for a coffee machine, **characterized by**:
a lower main body (2) having an unlocking piece (223) and at least one first engaging portion (227);
an upper cover (3) connected pivotally to and openably covering said lower main body (2); and
a locking mechanism (6) including a first locking member (62) pivotally mounted on said upper cover (3), a second locking member (64) pivotally mounted on said upper cover (3) in proximity to said first locking member (62), a locking spring (65) urging said first and second locking members (62, 64) to move toward each other to a locking position, and a handle (66) mounted on said upper cover (3) and engaged to said first locking member (62) to control pivoting of said first locking member (62), said first locking member (62) including a primary locking plate (621) having a first retaining portion (626), and a second engaging portion (625) releasably engageable with said first engaging portion (227), said second locking member (64) having a second retaining portion (643) releasably engageable with said first retaining portion (626), and an unlocking portion (642) corresponding to said unlocking piece (223);
wherein, when said upper cover (3) is in a covering position, said second engaging portion (625) engages said first engaging portion (227), and said unlocking piece (223) abuts against and pushes said unlocking portion (642) to disengage said second retaining portion (643) from said first retaining portion (626) and to dispose said first and second locking members (62, 64) in an unlocking position;
wherein, when said upper cover (3) is in an open position, said handle (66) drives said first locking member (62) to pivot, said second engaging portion (625) disengages from said first engaging portion (227), said unlocking piece (223) does not abut against said unlocking portion (642), and said locking spring (65) pulls said first and second locking members (62, 64) toward engagement with each other to switch said first and second members (62, 64) from the unlocking position to the locking position.

2. The locking device (12) as claimed in Claim 1, **characterized in that** said first locking member (62) further includes a secondary locking plate (621') parallel to and spaced apart from said primary locking plate (621), and a connecting plate (622) connected between said primary and secondary locking plates (621, 621'), said handle (66) having an operating plate (661) protruding from said upper cover (3), and at least one clamping plate (662) projecting from said operating plate (661) into an interior of said upper cover (3), said clamping plate (662) having a clamping groove (663) clampingly receiving said connecting plate (622).

3. The locking device (12) as claimed in Claim 2, **characterized in that** said at least one first engaging portion (227) includes two said first engaging portions (227) spaced apart from each other in a left-right direction, each of said first engaging portions (227) being in the form of an insert pin, said secondary locking plate (621') also having a second engaging portion (625), said second engaging portions (625) of said primary and secondary locking plates (621, 621') respectively engaging said first engaging portions (227) when said upper cover (3) is in the covering position.

4. The locking device (12) as claimed in Claim 1, **characterized in that** said unlocking piece (223) has a first inclined face (225), said unlocking portion (642) having a second inclined face (645), said first inclined face (225) abutting against and pushing said second inclined face (645) to cause said second locking member (64) to pivot when said upper cover (3) is moved to the covering position.

5. The locking device (12) as claimed in Claim 1, further **characterized by** a main shaft (4) for pivotally mounting said upper cover (3) to said lower main body (2), said locking mechanism (6) further including a first pivot pin (61) for pivotally mounting said first locking member (62) to said upper cover (3), and a second pivot pin (63) for pivotally mounting said second locking member (64) to said upper cover (3).

6. The locking device (12) as claimed in Claim 5, further **characterized by** a torsion spring (5) sleeved on said main shaft (4) for biasing said upper cover (3) to the open position.

7. The locking device (12) as claimed in Claim 6, **characterized in that** said first locking member (62) further includes a secondary locking plate (621') parallel to and spaced apart from said primary locking plate (621), and a connecting plate (622) connected between said primary and secondary locking plates (621, 621'), said handle (66) having an operating plate (661) protruding from said upper cover (3), and at least one clamping plate (662) projecting from said operating plate (661) into an interior of said upper cover (3), said clamping plate (662) having a clamping groove (663) clampingly receiving said connecting plate (622).

8. The locking device (12) as claimed in Claim 7, **characterized in that** said at least one first engaging portion (227) includes two said first engaging portions (227) spaced apart from each other in a left-right direction, each of said first engaging portions (227) being in the form of an insert pin, said secondary locking plate (621') also having a second engaging portion (625), said second engaging portions (625) of said primary and secondary locking plates (621, 621') respectively engaging said first engaging portions (227) when said upper cover (3) is in the covering position.

9. The locking device (12) as claimed in Claim 8, **characterized in that** said unlocking piece (223) has a first inclined face (225), said unlocking portion (642) having a second inclined face (645), said first inclined face (225) abutting against and pushing said second inclined face (645) to cause said second locking member (64) to pivot when said upper cover (3) is moved to the covering position.

10. A capsule coffee machine (1) for brewing coffee from a coffee capsule (10), **characterized by**:
a housing (11); and
a locking device (12) as claimed in Claim 1 mounted in said housing (11);and
a brewing unit (13) disposed in said upper cover (3).

11. The capsule coffee machine (1) as claimed in Claim 10, **characterized in that** said locking device (12) further includes a main shaft (4) for pivotally mounting said upper cover (3) on said lower main body (2), and a torsion spring (5) sleeved on said main shaft (4) for biasing said upper cover (3) to pivot to the open position.

12. The capsule coffee machine (1) as claimed in Claim 10, **characterized in that** said first locking member (62) further includes a secondary locking plate (621') parallel to and spaced apart from said primary locking plate (621), and a connecting plate (622) connected between said primary and secondary locking plates (621, 621'), said handle (66) having an operating plate (661) protruding from said upper cover (3), and at least one clamping plate (662) projecting from said operating plate (661) into an interior of said upper cover (3), said clamping plate (662) having a clamping groove (663) clampingly receiving said connecting plate (622).

13. The capsule coffee machine (1) as claimed in Claim 11, **characterized in that** said lower main body (2) includes a fixed body portion (21), and a sliding body portion (22) slidably mounted to said fixed body portion (21) and provided with said unlocking piece (223), said fixed body portion (21) having an accommodation space (210) for accommodating said sliding body portion (22), said upper cover (3) including an outer frame (31), and a brewing-supporting frame (32) disposed in said outer frame (31) for supporting said brewing unit (13), said outer frame (31) including two push-pull rods (312) spaced apart from each other in a left-right direction, said push-pull rods (312) pushing said sliding body portion (22) to move out of said accommodation space (210) when said upper cover (3) moves to the open position and pulling said sliding body portion (22) to move into said accommodation space (210) when said upper cover (3) moves to the covering position.

14. The capsule coffee machine (1) as claimed in Claim 13, **characterized in that** said unlocking piece (223) has a first inclined face (225), said unlocking portion (642) having a second inclined face (645), said first inclined face (225) abutting against and pushing said second inclined face (645) to cause said second locking member (64) to pivot when said upper cover (3) is moved to the covering position.

15. The capsule coffee machine (1) as claimed in Claim 14, **characterized in that** said locking mechanism (6) further includes a first pivot pin (61) for pivotally mounting said first locking member (62) to said upper cover (3), and a second pivot pin (63) for pivotally mounting said second locking member (64) to said upper cover (3).

## Patentansprüche

1. Arretierungsvorrichtung (12) für eine Kaffeemaschine, durch Folgendes gekennzeichnet:
einen unteren Hauptkörper (2), der ein Entsperrungsstück (223) und mindestens einen ersten Eingriffsabschnitt (227) aufweist;
eine obere Abdeckung (3), die schwenkbar mit dem unteren Hauptkörper (2) verbunden ist, diesen abdeckt und geöffnet werden kann; und
einen Arretierungsmechanismus (6), der ein erstes Arretierungselement (62), das schwenkbar an die obere Abdeckung (3) montiert ist, ein zweites Arretierungselement (64), das nahe dem ersten Arretierungselement (62) schwenkbar an die obere Abdeckung (3) montiert ist, eine Arretierungsfeder (65), die das erste und das zweite Arretierungselement (62, 64) zu einer Bewegung zueinander hin in eine Arretierungsposition drängt, und einen Griff (66) beinhaltet, der an die obere Abdeckung (3) montiert ist und mit dem ersten Arretierungselement (62) in Eingriff steht, um das Schwenken des ersten Arretierungselements (62) zu steuern, wobei das erste Arretierungselement (62) eine primäre Arretierungsplatte (621) beinhaltet, die einen ersten Halteabschnitt (626) aufweist, und einen zweiten Eingriffsabschnitt (625), der lösbar mit dem ersten Eingriffsabschnitt (227) in Eingriff gebracht werden kann, wobei das zweite Arretierungselement (64) einen zweiten Halteabschnitt (643) aufweist, der lösbar mit dem ersten Halteabschnitt (626) in Eingriff gebracht werden kann, und einen Entsperrungsabschnitt (642), der dem ersten Entsperrungsstück (223) entspricht;
wobei das zweite Eingriffselement (625), wenn sich die obere Abdeckung (3) in einer Abdeckposition befindet, mit dem ersten Eingriffsabschnitt (227) in Eingriff steht und das Entsperrungsstück (223) am Entsperrungsabschnitt (642) anliegt und auf diesen drückt, um den zweiten Halteabschnitt (643) vom ersten Halteabschnitt (626) zu lösen und das erste und das zweite Arretierungselement (62, 64) in einer Entsperrungsposition anzuordnen;
wobei der Griff (66), wenn sich die obere Abdeckung (3) in einer offenen Position befindet, das erste Arretierungselement (62) antreibt zu schwenken, wobei sich der zweite Eingriffsabschnitt (625) vom ersten Eingriffsabschnitt (227) löst, das Entsperrungsstück (223) nicht am Entsperrungsabschnitt (642) anliegt und die Arretierungsfeder (65) das erste und das zweite Arretierungselement (62, 64) in Eingriff miteinander zieht, um das erste und das zweite Element (62, 64) aus der Entsperrungsposition in die Arretierungsposition umzustellen.

2. Arretierungsvorrichtung (12) nach Anspruch 1, **dadurch gekennzeichnet, dass** das erste Arretierungselement (62) ferner eine sekundäre Arretierungsplatte (621') beinhaltet, die parallel zur primären Arretierungsplatte (621) liegt und von dieser beabstandet ist, und eine Verbindungsplatte (622), die zwischen der primären und der sekundären Arretierungsplatte (621, 621') eingebunden ist, wobei der Griff (66) eine Bedienplatte (661) aufweist, die von der oberen Abdeckung (3) hervorsteht, und mindestens eine Klemmplatte (662), die von der Bedienplatte (661) in einen Innenraum der oberen Abdeckung (3) hervorsteht, wobei die Klemmplatte (662) eine Klemmrille (663) aufweist, welche die Verbindungsplatte (622) klemmend aufnimmt.

3. Arretierungsvorrichtung (12) nach Anspruch 2, **dadurch gekennzeichnet, dass** der mindestens eine erste Eingriffsabschnitt (227) zwei erste Eingriffsabschnitte (227) beinhaltet, die in einer Links-Rechts-Richtung voneinander beabstandet sind, wobei jeder der ersten Eingriffsabschnitte (227) in Form eines Einsetzstiftes vorliegt, wobei die sekundäre Arretierungsplatte (621') ebenfalls einen zweiten Eingriffsabschnitt (625) aufweist, wobei die zweiten Eingriffsabschnitte (625) der primären und der sekundären Eingriffsplatte (621, 621') jeweils mit den ersten Eingriffsabschnitten (227) in Eingriff stehen, wenn sich die obere Abdeckung (3) in der Abdeckposition befindet.

4. Arretierungsvorrichtung (12) nach Anspruch 1, **dadurch gekennzeichnet, dass** das Entsperrungsstück (223) eine erste geneigte Fläche (225) aufweist, wobei der Entsperrungsabschnitt (642) eine zweite geneigte Fläche (645) aufweist, wobei die erste geneigte Fläche (225) an der zweiten geneigten Fläche (645) anliegt und auf diese drückt, um das Schwenken des zweiten Arretierungselements (64) zu bewirken, wenn die obere Abdeckung (3) in die Abdeckposition bewegt wird.

5. Arretierungsvorrichtung (12) nach Anspruch 1, ferner **gekennzeichnet durch** eine Hauptwelle (4) für das schenkbare Montieren der oberen Abdeckung (3) an den unteren Hauptkörper (2), wobei der Arretierungsmechanismus (6) ferner einen ersten Schwenkstift (61) für das schwenkbare Montieren des ersten Arretierungselements (62) an die obere Abdeckung (3) und einen zweiten Schwenkstift (63) für das schwenkbare Montieren des zweiten Arretierungselements (64) an die obere Abdeckung (3) beinhaltet.

6. Arretierungsvorrichtung (12) nach Anspruch 5, ferner **gekennzeichnet durch** eine Torsionsfeder (5), die auf die Hauptwelle (4) aufgesetzt ist, um die obere Abdeckung (3) in die offene Position vorzuspannen.

7. Arretierungsvorrichtung (12) nach Anspruch 6, **dadurch gekennzeichnet, dass** das erste Arretierungselement (62) ferner eine sekundäre Arretierungsplatte (621') beinhaltet, die parallel zur primären Arretierungsplatte (621) liegt und von dieser beabstandet ist, und eine Verbindungsplatte (622), die zwischen der primären und der sekundären Arretierungsplatte (621, 621') eingebunden ist, wobei der Griff (66) eine Bedienplatte (661) aufweist, die von der oberen Abdeckung (3) hervorsteht, und mindestens eine Klemmplatte (662), die von der Bedienplatte (661) in einen Innenraum der oberen Abdeckung (3) hervorsteht, wobei die Klemmplatte (662) eine Klemmrille (663) aufweist, welche die Verbindungsplatte (622) klemmend aufnimmt.

8. Arretierungsvorrichtung (12) nach Anspruch 7, **dadurch gekennzeichnet, dass** der mindestens eine erste Eingriffsabschnitt (227) zwei erste Eingriffsabschnitte (227) beinhaltet, die in einer Links-Rechts-Richtung voneinander beabstandet sind, wobei jeder der ersten Eingriffsabschnitte (227) in Form eines Einsetzstiftes vorliegt, wobei die sekundäre Arretierungsplatte (621') ebenfalls einen zweiten Eingriffsabschnitt (625) aufweist, wobei die zweiten Eingriffsabschnitte (625) der primären und der sekundären Eingriffsplatte (621, 621') jeweils mit den ersten Eingriffsabschnitten (227) in Eingriff stehen, wenn sich die obere Abdeckung (3) in der Abdeckposition befindet.

9. Arretierungsvorrichtung (12) nach Anspruch 8, **dadurch gekennzeichnet, dass** das Entsperrungsstück (223) eine erste geneigte Fläche (225) aufweist, wobei der Entsperrungsabschnitt (642) eine zweite geneigte Fläche (645) aufweist, wobei die erste geneigte Fläche (225) an der zweiten geneigten Fläche (645) anliegt und auf diese drückt, um das Schwenken des zweiten Arretierungselements (64) zu bewirken, wenn die obere Abdeckung (3) in die Abdeckposition bewegt wird.

10. Kapsel-Kaffeemaschine (1) zum Brühen von Kaffee aus einer Kaffeekapsel (10), durch Folgendes gekennzeichnet:
ein Gehäuse (11) ; und
eine Arretierungsvorrichtung (12) nach Anspruch 1, die in das Gehäuse (11) montiert ist; und
eine Brüheinheit (13), die in der oberen Abdeckung (3) angeordnet ist.

11. Kapsel-Kaffeemaschine (1) nach Anspruch 10, **dadurch gekennzeichnet, dass** die Arretierungsvorrichtung (12) ferner eine Hauptwelle (4) für das schwenkbare Montieren der oberen Abdeckung (3) an den unteren Hauptkörper (2) und eine Torsionsfeder (5) beinhaltet, die auf die Hauptwelle (4) aufgesetzt ist, um die obere Abdeckung (3) zum Schwenken in die offene Position vorzuspannen.

12. Kapsel-Kaffeemaschine (1) nach Anspruch 10, **dadurch gekennzeichnet, dass** das erste Arretierungselement (62) ferner eine sekundäre Arretierungsplatte (621') beinhaltet, die parallel zur primären Arretierungsplatte (621) liegt und von dieser beabstandet ist, und eine Verbindungsplatte (622), die zwischen der primären und der sekundären Arretierungsplatte (621, 621') eingebunden ist, wobei der Griff (66) eine Bedienplatte (661) aufweist, die von der oberen Abdeckung (3) hervorsteht, und mindestens eine Klemmplatte (662), die von der Bedienplatte (661) in einen Innenraum der oberen Abdeckung (3) hervorsteht, wobei die Klemmplatte (662) eine Klemmrille (663) aufweist, welche die Verbindungsplatte (622) klemmend aufnimmt.

13. Kapsel-Kaffeemaschine (1) nach Anspruch 11, **dadurch gekennzeichnet, dass** der untere Hauptkörper (2) einen feststehenden Körperabschnitt (21) und einen gleitenden Körperabschnitt (22) beinhaltet, der gleitfähig an den ersten feststehenden Körperabschnitt (21) montiert und mit dem Entsperrungsstück (223) ausgestattet ist, wobei der feststehende Körperabschnitt (21) einen Unterbringungsraum (210) aufweist, um den gleitenden Körperabschnitt (22) unterzubringen, wobei die obere Abdeckung (3) einen Außenrahmen (31) und einen Brüh-Stützrahmen (32) beinhaltet, der am Außenrahmen (31) angeordnet ist, um die Brüheinheit (13) abzustützen, wobei der Außenrahmen (31) zwei Schub-Zug-Stangen (312) beinhaltet, die in Links-Rechts-Richtung voneinander beabstandet sind, wobei die Schub-Zug-Stangen (312) den gleitenden Körperabschnitt (22) derart drücken, dass er sich aus dem Unterbringungsraum (210) bewegt, wenn sich die obere Abdeckung (3) in die offene Position bewegt, und den gleitenden Körperabschnitt (22) derart ziehen, dass er sich in den Unterbringungsraum (210) bewegt, wenn sich die obere Abdeckung (3) in die Abdeckposition bewegt.

14. Kapsel-Kaffeemaschine (1) nach Anspruch 13, **dadurch gekennzeichnet, dass** das Entsperrungsstück (223) eine erste geneigte Fläche (225) aufweist, wobei der Entsperrungsabschnitt (642) eine zweite geneigte Fläche (645) aufweist, wobei die erste geneigte Fläche (225) an der zweiten geneigten Fläche (645) anliegt und auf diese drückt, um das Schwenken des zweiten Arretierungselements (64) zu bewirken, wenn die obere Abdeckung (3) in die Abdeckposition bewegt wird.

15. Kapsel-Kaffeemaschine (1) nach Anspruch 14, **dadurch gekennzeichnet, dass** der Arretierungsmechanismus (6) ferner einen ersten Schwenkstift (61) für das schwenkbare Montieren des ersten Arretierungselements (62) an die obere Abdeckung (3) und einen zweiten Schwenkstift (63) für das schwenkbare Montieren des zweiten Arretierungselements (64) an die obere Abdeckung (3) beinhaltet.

## Revendications

1. Dispositif de verrouillage (12) pour un percolateur, **caractérisé par** :
un corps principal inférieur (2) ayant une pièce de déverrouillage (223) et au moins une première partie de mise en prise (227) ;
un couvercle supérieur (3) relié de manière pivotante et couvrant de manière ouvrable ledit corps principal inférieur (2) ; et
un mécanisme de verrouillage (6) incluant un premier élément de verrouillage (62) monté de manière pivotante sur ledit couvercle supérieur (3), un second élément de verrouillage (64) monté de manière pivotante sur ledit couvercle supérieur (3) à proximité dudit premier élément de verrouillage (62), un ressort de verrouillage (65) poussant lesdits premier et second éléments de verrouillage (62, 64) pour qu'ils se déplacent l'un vers l'autre jusqu'à une position de verrouillage, et une poignée (66) montée sur ledit couvercle supérieur (3) et en prise sur ledit premier élément de verrouillage (62) pour commander le pivotement dudit premier élément de verrouillage (62), ledit premier élément de verrouillage (62) incluant une plaque de verrouillage primaire (621) ayant une première partie de retenue (626), et une seconde partie de mise en prise (625) pouvant être mis en prise de façon amovible avec ladite première partie de mise en prise (227), ledit second élément de verrouillage (64) ayant une seconde partie de retenue (643) pouvant être mis en prise de façon amovible avec ladite première partie de retenue (626), et une partie de déverrouillage (642) correspondant à ladite pièce de déverrouillage (223) ;
dans lequel, lorsque ledit couvercle supérieur (3) est dans une position de couverture, ladite seconde partie de mise en prise (625) met en prise ladite première partie de mise en prise (227), et ladite pièce de déverrouillage (223) bute contre et pousse ladite partie de déverrouillage (642) pour dégager ladite seconde partie de retenue (643) de ladite première partie de retenue (626) et pour disposer lesdits premier et second éléments de verrouillage (62, 64) dans une position de déverrouillage ;
dans lequel, lorsque ledit couvercle supérieur (3) est dans une position ouverte, ladite poignée (66) entraîne ledit premier élément de verrouillage (62) à pivoter, ladite seconde partie de mise en prise (625) se dégage de ladite première partie de mise en prise (227), ladite pièce de déverrouillage (223) ne bute pas contre ladite partie de déverrouillage (642), et ledit ressort de verrouillage (65) tire lesdits premier et second éléments de verrouillage (62, 64) vers la mise en prise l'un avec l'autre pour commuter lesdits premier et second éléments (62, 64) de la position de déverrouillage à la position de verrouillage.

2. Dispositif de verrouillage (12) selon la revendication 1, **caractérisé en ce que** ledit premier élément de verrouillage (62) inclut en outre une plaque de verrouillage secondaire (621') parallèle à et espacée de ladite plaque de verrouillage primaire (621), et une plaque de connexion (622) reliée entre lesdites plaques de verrouillage primaire et secondaire (621, 621'), ladite poignée (66) ayant une plaque de mise en oeuvre (661) dépassant dudit couvercle supérieur (3), et au moins une plaque de serrage (662) dépassant de ladite plaque de mise en oeuvre (661) dans un intérieur dudit couvercle (3), ladite plaque de serrage (662) ayant une rainure de serrage (663) recevant par serrage ladite plaque de connexion (622).

3. Dispositif de verrouillage (12) selon la revendication 2, **caractérisé en ce que** ladite au moins une première partie de mise en prise (227) inclut deux dites premières parties de mise en prise (227) espacées l'une de l'autre dans un sens gauche-droite, chacune desdites premières parties de mise en prise (227) étant sous la forme d'une broche d'insert, ladite plaque de verrouillage secondaire (621') ayant également une seconde partie de mise en prise (625), lesdites secondes parties de mise en prise (625) desdites plaques de verrouillage primaire et secondaire (621, 621') mettant respectivement en prise lesdites premières parties de mise en prise (227) lorsque ledit couvercle supérieur (3) est dans la position de couverture.

4. Dispositif de verrouillage (12) selon la revendication 1, **caractérisé en ce que** ladite pièce de déverrouillage (223) a une première face inclinée (225), ladite partie de déverrouillage (642) ayant une seconde face inclinée (645), ladite première face inclinée (225) butant contre et poussant ladite seconde face inclinée (645) pour amener ledit second élément de verrouillage (64) à pivoter lorsque ledit couvercle supérieur (3) est déplacé jusqu'à la position de couverture.

5. Dispositif de verrouillage (12) selon la revendication 1, **caractérisé en outre par** un arbre principal (4) pour monter de manière pivotante ledit couvercle supérieur (3) sur ledit corps principal inférieur (2), ledit mécanisme de verrouillage (6) incluant en outre une première broche de pivot (61) pour monter de manière pivotante ledit premier élément de verrouillage (62) sur ledit couvercle supérieur (3), et une seconde broche de pivot (63) pour monter de manière pivotante ledit second élément de verrouillage (64) sur ledit couvercle supérieur (3).

6. Dispositif de verrouillage (12) selon la revendication 5, **caractérisé en outre par** un ressort de torsion (5) manchonné sur ledit arbre principal (4) pour solliciter ledit couvercle supérieur (3) vers la position ouverte.

7. Dispositif de verrouillage (12) selon la revendication 6, **caractérisé en ce que** ledit premier élément de verrouillage (62) inclut en outre une plaque de verrouillage secondaire (621') parallèle à et espacé de ladite plaque de verrouillage primaire (621), et une plaque de connexion (622) reliée entre lesdites plaques de verrouillage primaire et secondaire (621, 621'), ladite poignée (66) ayant une plaque de mise en oeuvre (661) dépassant dudit couvercle supérieur (3), et au moins une plaque de serrage (662) dépassant de ladite plaque de mise en oeuvre (661) dans un intérieur dudit couvercle supérieur (3), ladite plaque de serrage (662) ayant une rainure de serrage (663) recevant par serrage ladite plaque de connexion (622).

8. Dispositif de verrouillage (12) selon la revendication 7, **caractérisé en ce que** ladite au moins une première partie de mise en prise (227) inclut deux dites premières parties de mise en prise (227) espacées l'une de l'autre dans un sens gauche-droite, chacune desdites premières parties de mise en prise (227) étant sous la forme d'une broche d'insert, ladite plaque de verrouillage secondaire (621') ayant également une seconde partie de mise en prise (625), lesdites secondes parties de mise en prise (625) desdites plaques de verrouillage primaire et secondaire (621, 621') mettant respectivement en prise lesdites premières parties de mise en prise (227) lorsque ledit couvercle supérieur (3) est dans la position de couverture.

9. Dispositif de verrouillage (12) selon la revendication 8, **caractérisée en ce que** ladite pièce de déverrouillage (223) a une première face inclinée (225), ladite partie de déverrouillage (642) ayant une seconde face inclinée (645), ladite première face inclinée (225) butant contre et poussant ladite seconde face inclinée (645) pour amener ledit second élément de verrouillage (64) à pivoter lorsque ledit couvercle supérieur (3) est déplacé vers la position de couverture.

10. Percolateur à capsules (1) pour infuser du café à partir d'une capsule de café (10), **caractérisé par** :
un logement (11) ; et
un dispositif de verrouillage (12) selon la revendication 1 monté dans ledit logement (11) ; et
une unité d'infusion (13) disposée dans ledit couvercle supérieur (3).

11. Percolateur à capsules (1) selon la revendication 10, **caractérisé en ce que** ledit dispositif de verrouillage (12) inclut en outre un arbre principal (4) pour monter de manière pivotante ledit couvercle supérieur (3) sur ledit corps principal inférieur (2), et un ressort de torsion (5) manchonné sur ledit arbre principal (4) pour solliciter ledit couvercle supérieur (3) pour pivoter vers la position ouverte.

12. Percolateur à capsules (1) selon la revendication 10, **caractérisé en ce que** ledit premier élément de verrouillage (62) inclut en outre une plaque de verrouillage secondaire (621') parallèle à et espacée de ladite plaque de verrouillage primaire (621), et une plaque de connexion (622) reliée entre lesdites plaques de verrouillage primaire et secondaire (621, 621'), ladite poignée (66) ayant une plaque de mise en oeuvre (661) dépassant dudit couvercle supérieur (3), et au moins une plaque de serrage (662) dépassant de ladite plaque de mise en oeuvre (661) dans un intérieur dudit couvercle supérieur (3), ladite plaque de serrage (662) ayant une rainure de serrage (663) recevant par serrage ladite plaque de connexion (622).

13. Percolateur à capsules (1) selon la revendication 11, **caractérisé en ce que** ledit corps principal inférieur (2) inclut une partie de corps fixe (21) et une partie de corps coulissante (22) montée de manière coulissante sur ladite partie de corps fixe (21) et munie de ladite pièce de déverrouillage (223), ladite partie de corps fixe (21) ayant un espace de logement (210) pour loger ladite partie de corps coulissante (22), ledit couvercle supérieur (3) incluant un châssis extérieur (31) et un châssis de support d'infusion (32) disposé dans ledit châssis extérieur (31) pour supporter ladite unité d'infusion (13), ledit châssis extérieur (31) incluant deux tiges symétriques (312) espacées l'une de l'autre dans un sens gauche-droite, lesdites tiges symétriques (312) poussant ladite partie de corps coulissante (22) pour qu'elle se déplace hors dudit espace de logement (210) lorsque ledit couvercle supérieur (3) se déplace vers la position ouverte et tirant ladite partie de corps coulissante (22) pour se déplacer dans ledit espace de logement (210) lorsque ledit couvercle supérieur (3) se déplace vers la position de couverture.

14. Percolateur à capsules (1) selon la revendication 13, **caractérisé en ce que** ladite pièce de déverrouillage (223) a une première face inclinée (225), ladite partie de déverrouillage (642) ayant une seconde face inclinée (645), ladite première face inclinée (225) butant contre et poussant ladite seconde face inclinée (645) pour amener ledit second élément de verrouillage (64) à pivoter lorsque ledit couvercle supérieur (3) est déplacé vers la position de couverture.

15. Percolateur à capsules (1) selon la revendication 14, **caractérisé en ce que** ledit mécanisme de verrouillage (6) inclut en outre une première broche de pivot (61) pour monter de manière pivotante ledit premier élément de verrouillage (62) sur ledit couvercle supérieur (3), et une seconde broche de pivot (63) pour monter de manière pivotante ledit second élément de verrouillage (64) sur ledit couvercle supérieur (3).
